# EUROPEAN PATENT SPECIFICATION

(11) **EP 0 821 550 B1**
(45) Date of publication and mention of the grant of the patent: **29.09.1999**
(21) Application number: 96907653.8
(22) Date of filing: 26.03.1996
(51) Int. Cl.: A01G 27/02

(54) **A SELF-IRRIGATING POT**
TOPF FÜR SELBST-BEWÄSSERUNG
POT DE FLEURS AUTO-IRRIGANT

(30) Priority: 07.04.1995 IT PE950012
(43) Date of publication of application: 04.02.1998
(73) Proprietor: Cacciatore, Benito, 65100 Pescara (IT)
(72) Inventor: Cacciatore, Benito, 65100 Pescara (IT)
(74) Representative: Gristina, Giorgio
(86) International application number: IT9600060
(87) International publication number: WO9631112

(56) References cited:
- CH-A- 667 972
- DE-A- 1 482 269
- DE-B- 1 045 712
- FR-A- 1 446 275
- GB-A- 1 513 876
- GB-A- 2 250 171

## Description

### Technical Field

The present invention relates to the field of the irrigation of plants, such as for instance for nurseries and for domestic plants.

More specifically, the present invention relates to a pot fitted with a system for automatically irrigating the same.

### Background of the Invention

It is known that the cultivation of plants in a pot requires a frequent watering of the same, which is a problem of time engagement for instance for housewives.

Control systems are in use at the present day that allow the automatic irrigation of pots, realized electrically or electronically, or that exploit the pressure of water itself. However, systems are dealt with external to the pot, which require a substantial energy consumption and anyhow cannot dispense with a human outer almost daily maintenance.

Such automatic irrigation systems, however, have the drawback that, besides a high technological content, which requires skilled personnel, they need for high initial capital investments and for high management expenses, all to damage for the medium-small nursery and of the domestic use, without taking the already mentioned maintenance expenses, intended as a work force, drive force, into account.

Automatic irrigation systems are also known, that water a pot as a function of the degree of humidity of the soil filling the pot, without the intervention of external control systems.

A system of the latter type is disclosed in Swiss Patent CH 667,972 to Alexander Wild, referred to as Dl herein in the following.

In Dl a self-irrigating pot is disclosed, the side and the bottom wall whereof is built as an air space intended to be filled with water through a hole to be closed with a plug. The air space wall so has an internal, hollow wall - to be filled with soil - and an outer, convex wall. The inside wall has at its bottom two capillary through-holes shaped as cone frustums, with the narrowing conicity turned upside, toward the hollow inside or the pot, mutually spaced by a distance which is a function of the water volume in the air space.

The self-irrigating pot of document Dl works as follows. After filling the pot with dry soil in its hollow inside and the air space with a volume of water leaving an air volume above it, water passes through the two aforementioned through-holes till when the sucking force, exerted by the surface tension between the soil and the water, by capillarity effect, is of the same magnitude of the weigth or the water column. It is to be pointed out that without the soil the passage of water through the capillary through-holes would not take place.

So, in Dl the water is displaced by capillarity effect. When the soil has reached a degree of humidity, the capillarity effect stops.

When the soil has become dry again, by the absorption of a plant arranged in it and the drying due to the environment, the capillarity absorption takes place again.

In more detail, when the soil is dry, air passes through the whole soil layer up to reach one of the aforementioned capillary through-holes, be it the first capillary through-hole, and pass through it and go to the aforementioned air volume above the water volume. At the same time, water is sucked by the other capillary through-hole. The soil gradually becomes more humid towards the first through-hole. When the soil correspondingly to the latter is sufficiently enriched in humidity, the passage of air stops.

A drawback of the latter automatic irrigation system is that the absorption by capillarity effect is a very poor function of the temperature of the environment where the pot with a plant finds itself. Instead, it depends on the vapourization rate of the water in the soil, which is very slow. So, the response of the irrigation system is slow, and there will be considerable time intervals of poor humidity of the soil.

The present invention has the object to provide a self-irrigating pot that overcomes the drawbacks of the present day automatic irrigation systems.

To this object to produce the self-watering of pot cultivations, the pressure-depressure acting on a water volume, held in an air-tight container provided with capillary fluid communication means to the outside, caused by the expansion/contraction of an air volume, arranged over the water and not in fluid communication with the air existing in the soil held in the pot, by temperature variation, particularly between night and day, is exploited.

Therefore, the subject of the present invention is a self-irrigating pot with a lateral and a bottom wall, provided with an integral or non integral tank, which tank is provided with means for its airtight closing, means for its capillary fluid communication with the pot and intended during use to be partially filled with water, so that air would be also confined therein, characterized in that the top portion of the tank has a larger internal horizontal cross-section than its lower portion, and in that said pot can be automatically irrigated as a consequence of a temperature variation which causes said air and the tank itself to expand and/or contract accordingly.

Preferred embodiments of the invention are set forth in the subclaims.

The pot according to the present invention turns out to be completely autonomous, in the sense that the only necessary care to be taken is that of the filling of the tank each fifteenth-fortyfifth day, proportionally to the thermal change.

The advantages of the pot of the present invention are that the irrigation of the pot is substantially reduced, reducing to a minimum the risk of making a plant to die for a lack of water, that the irrigation takes place in the first hours of the morning at an ideal temperature; that the roots of the plant are not at direct contact with the outer wall of the pot so as not to undergo temperature changes; that in adverse atmospheric conditions (rain and cold) the pot doesn't release water to the plant; that the water quantity is decided by the pot proportionally to the thermal change of the environment; that the pot can be constructed for irrigation quantities in proportion to the types of cultivation that one wants to execute; that it is possible to irrigate with treated or manured water; that in the nursery cultivation stage it is possible to feed the pots directly from the existing net eliminating the problems of the drop plants; that the temperature of the irrigation water is equal or slightly higher than the temperature of the roots; that the level of the water can be controlled from outside so as to be able to programme the eventual filling, and that the greater the temperature, the greater the evaporation, with a fresh effect for the plant.

The present invention will be understood at the best based upon the following disclosure of its preferred embodiment, given only as a matter of example, absolutely not of restriction, with reference to the annexed drawings, wherein:

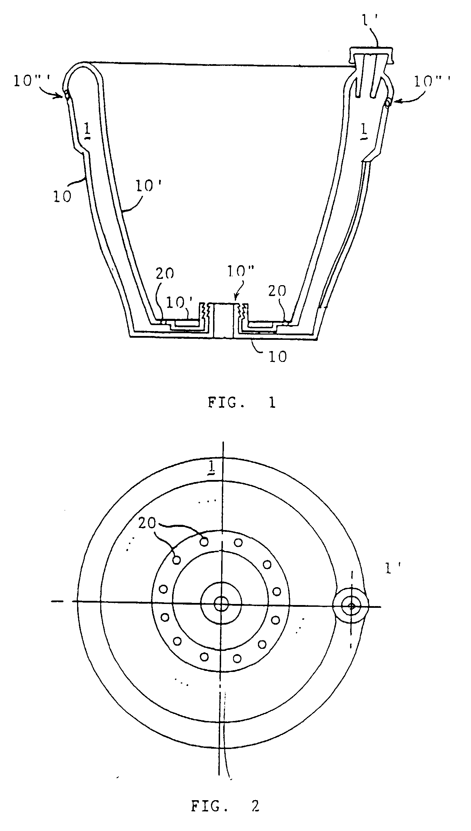

- FIGURE 1 is longitudinal section view, and
- FIGURE 2 is a top plant view of a pot according to the present invention.

As illustrated in the FIGURES, a pot according to the teaching of the present invention has the side and bottom wall, made up as an air space 1. Such an air space can be put into connection with the outside through a tight seal plug 1'.

According to an execution, the pot is realized through the connection of an outer wall member 10 and an inner wall member 10' on the bottom through a locking device 10'', laterally through welding or hermetic seal joint 10'''.

On the inner wall on the bottom of the pot capillary through holes 20, having a diametre of ½-1,2 mm, which connect the water tank made up of the air space 1 with the inner concavity of the pot; these holes make up as many channels for the automatic irrigation, that is to say the self-irrigation of the mould.

Such capillary channels are provided with a slant to the top to prevent the water from exiting continuously.

In the air space 1 besides water there will be an air bubble. This one expands any time the temperature rises, while contracts itself any time the temperature decreases.

The water output will be restricted by the fact that the irrigation channels 20 are slanting to the top, whereby the drops to exit have to overcome the force of gravity. This will be only possible in the hours of the day, when the inner temperature of the air space is such as to increase the pressure exerted by the air on the liquid. In the night, on the contrary, the irrigation is not possible in that the reduced temperature will cause the contraction of the air, decreasing the pressure, so as to prevent the irrigation. In the meanwhile, such a concentration of the air will allow an air sucking equal to the volume of the liquid got out in the preceding day.

So there will be watering only when it is necessary, that is when the high temperature on a side makes thirsty the plants and on the other side will increase the pressure of air allowing the reexiting of the water itself.

The present invention has been disclosed and depicted with reference to a specific embodiment thereof, but it is to be expressedly understood that variations, additions and/or omissions can be made, without so departing from the original presented teaching, the protection scope whereof is only defined by the appended claims.

For instance, as a fluid communication means between the air space and the inside of the pot capillary through holes have been described. Anyhow, they could be substituted in their funcionality by a permeable wall on the bottom fit for the passage of water for its delivering to the mould and of air for its drawing, as a function of temperature.

## Claims

1. A self-irrigating pot with a lateral and a bottom wall, provided with an integral or non integral tank, which tank is provided with means for its airtight closing, means for its capillary fluid communication with the pot and intended during use to be partially filled with water, so that air would be also confined therein, characterized in that the top portion of the tank has a larger internal horizontal cross-section than its lower portion, and in that said pot can be automatically irrigated as a consequence of a temperature variation which causes said air and the tank itself to expand and/or contract accordingly.

2. The self-irrigating pot according to Claim 1, wherein said lateral and bottom wall is made up with an air space (1), making up said tank, and comprising capillary means for communicating water and air (20) between said air space and the inside of the pot itself.

3. The self-irrigating pot according to Claim 2, wherein said capillary means for communicating water and air are made up of holes (20) arranged on the bottom wall, provided with a slant to the top

4. The self-irrigating pot according to claim 2, wherein said capillary means for communicating water and air are integrated in the wall toward the inside of the pot of said air space, by being this wall fabricated in a permeable material on the bottom.

## Patentansprüche

1. Ein selbstbewässernder Topf mit einer seitlichen und einer unteren Wand, mit einem integralen oder nicht integralen Tank, der luftdicht verschlossen werden kann, der über Kapillargefäße mit dem Topf in Verbindung steht und während des Gebrauchs teilweise mit Wasser gefüllt wird, so daß auch Luft darin eingeschlossen ist, und der sich dadurch auszeichnet, daß der obere Abschnitt des Tanks einen größeren inneren horizontalen Querschnitt hat als der untere, und dadurch, daß dieser Topf infolge einer Temperaturveränderung, welche die entsprechende Ausdehnung und/oder Kontraktion der Luft und des Tanks selbst zur Folge hat, automatisch bewässert werden kann.

2. Der selbstbewässernde Topf gemäß Anspruch 1, in dem die erwähnte seitliche und untere Wand mit einem Luftraum (1) den genannten Tank bilden, und in dem Kapillargefäße zum Durchlassen von Wasser und Luft (20) zwischen genanntem Luftraum und dem Inneren des Topfes selbst vorhanden sind.

3. Der selbstbewässernde Topf gemäß Anspruch 2, in dem die genannten Kapillargefäße zum Durchlassen von Wasser und Luft aus Löchern (20) in der geneigten Bodenwand bestehen.

4. Der selbstbewässernde Topf gemäß Anspruch 2, in dem die genannten Kapillargefäße zum Durchlassen von Wasser und Luft zum Inneren des Topfes in die Wand des genannten Luftraums eingelassen sind, wobei diese Wand unten aus einem durchlässigen Material gefertigt ist.

## Revendications

1. Un pot auto-irrigant avec une paroi latérale et un fond, doté d'un réservoir intégré ou non, ledit réservoir présentant une fermeture hermétique et des éléments pour le passage capillaire du liquide dans le pot et destiné à être partiellement rempli d'eau pendant l'utilisation de sorte que l'air reste également emprisonné à l'intérieur, caractérisé en ce que la partie supérieure dudit réservoir présente un profil transversal plus grand que sa partie inférieure, et que ledit pot peut être automatiquement irrigué à la suite d'une variation de température, qui provoque la dilatation et/ou la contraction de l'air et du réservoir selon que la température augmente ou diminue.

2. Le pot auto-irrigant, selon revendication 1, caractérisé en ce que la paroi latérale et le fond sont réalisés avec un matelas d'air (1) qui complète ledit réservoir, et comprenant des éléments capillaires pour le passage de l'eau et de l'air (20) entre ledit matelas d'air et l'intérieur du pot.

3. Le pot auto-irrigant selon revendication 2, caractérisé en ce que lesdits éléments capillaires pour le passage de l'eau et de l'air sont percés de trous (20) disposés sur le fond, et en ce qu'il est incliné vers le haut.

4. Le pot auto-irrigant selon revendication 2, caractérisé en ce que lesdits éléments capillaires pour le passage de l'eau et de l'air sont intégrés dans la paroi vers l'intérieur du pot avec ledit matelas d'air, et en ce que cette paroi est fabriquée en une matière perméable sur le fond.
